# EUROPEAN PATENT APPLICATION

(11) **EP 1 702 778 A1**
(43) Date of publication of application: **20.09.2006**
(21) Application number: 05005542.5
(22) Date of filing: 15.03.2005
(51) Int. Cl.: B60J 10/00, B60P 3/20

(54) **Refrigerated container for goods transport vehicles**

(71) Applicant: Miro Bravo, Vicente, 03801 Alcoy (Alicante) (ES)
(72) Inventor: Miro Bravo, Vicente, 03801 Alcoy (Alicante) (ES)
(74) Representative: Isern-Jara, Nuria

(57) **Abstract**

A refrigerated container for goods transport vehicles comprising a receptacle (1) whose inner section is refrigerated, including at least an access for accessing from outside formed at least by a door (2) which fits into a hole (3) provided in one of side walls of receptacle (1), wherein a seal (4) in provided in a perimetric frame of the hole (3) located in the receptacle (1), whose inner section is provided with heating means for maintaining portion of the perimetric frame at a temperature higher than inside temperature from receptacle (1).

## Description

Object of the present invention is to provide a refrigerated container for goods transport vehicles incorporating appreciable features and advantages with respect to containers used currently with the same purpose.

More specifically, it relates to a refrigerated container for goods transport vehicles comprising a receptacle whose inner section is refrigerated by a refrigeration unit, including at least an access from outside formed at least by a door which fits into a hole provided in one of side walls of receptacle.

### BACKGROUNDS OF THE INVENTION

It is well known the use of refrigerated containers or commonly called as refrigerated chambers placed in the rear of light or heavy vehicles for goods transport of perishable food products which have to maintain a predetermined temperature conditions. These containers are formed by a receptacle that can be provided with one or more doors to access to the receptacle. In order to avoid heat losses through said doors when are closed, such doors have seals in a perimetric region.

However, these present arrangement of these seals does not avoid the formation of ice surround that could difficult the opening or closure of the doors.

### SUMMARY OF THE INVENTION

The present invention has been developed in order to provide a refrigerated container which overcome the aforesaid drawbacks, while presenting other additional advantages, which become apparent from description, which is accompanied then.

The refrigerated container for goods transport vehicles of the present invention belongs to the kind that comprises a receptacle whose inner section is refrigerated by a refrigeration unit, including at least an access for accessing from outside formed at least by means of a door which fits into a hole provided in one of side walls of receptacle, and it is characterised in that a seal in provided in a perimetric frame of the hole located in the receptacle, whose inner section is provided with heating means for maintaining portion of the perimetric frame at a temperature higher than inside temperature from receptacle.

Thanks to these characteristics, the formation of ice is avoided near seals provided in the accesses for entering in the refrigerated container. The fact that the seal is directly disposed in the receptacle unlike current arrangements simplifies the assembly of the heating means since in a contrary way, said arrangement would be performed from the container to the door, so that it would be increased the production costs.

Preferably, the above-mentioned heating means comprise electrical resistances.

Further features and advantages of the refrigerated container object of the present invention will become apparent from description of a preferred embodiment, illustrated only by way of non-limitative example in drawings which are accompanied, wherein:

### BRIEF DESCRIPTION OF THE DRAWINGS

Figure 1 is a side elevational view of a portion of the container with an access which is provided with a door in opening position; and
Figure 2 is a detail cross sectional view taken along line A-A of figure 1.

### DESCRIPTION OF A PREFERRED EMBODIMENT

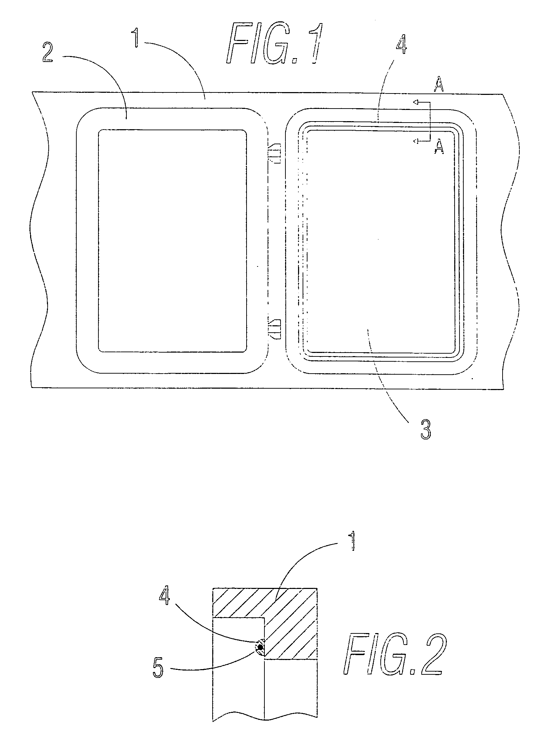

As shown in figure 1, the refrigerated container for goods transport vehicles which is object of the invention comprises a receptacle (1) whose inner section is refrigerated by a conventional refrigeration unit (not shown since it is not object of this invention), including said receptacle (1) at least one access for accessing from outside formed by a door (2) which fits into a hole (3) provided in any of side walls of the receptacle (1).

A seal (4) made up of rubber is provided in the perimetric frame of hole (3) disposed in the receptacle where in its inner section is provided with heating means for maintaining the perimetric frame portion of hole (3) at a temperature higher than inside temperature of the receptacle (1), thereby facilitating the thaw.

Such inner heating means comprise electrical resistances (5) powered by known means, as appreciated in more detail in figure 2.

Details, shapes, dimensions and further elements, as well as materials employed in the practical embodiment of the refrigerated container of the invention will be able to replace by others to be technically equivalent and they do not depart from both principle of the invention and the scope defined by following claims which are included.

## Claims

1. A refrigerated container for goods transport vehicles comprising a receptacle (1) whose inner section is refrigerated by a refrigeration unit, including at least an access for accessing from outside formed at the least by means of a door (2) which fits into a hole (3) provided in one of side walls of receptacle (1), **characterised in that** a seal (4) in provided in a perimetric frame of the hole (3) located in the receptacle (1), whose inner section is provided with heating means for maintaining portion of the perimetric frame at a temperature higher than inside temperature from receptacle (1).

2. A refrigerated container according to claim 1, **characterised in that** heating means comprise electrical resistances (5).
